# EUROPEAN PATENT APPLICATION

(11) **EP 3 228 542 A1**
(43) Date of publication of application: **11.10.2017**
(21) Application number: 17164866.0
(22) Date of filing: 04.04.2017
(51) Int. Cl.: B64D 11/00, H04W 84/18

(54) **DISTRIBUTED WIRELESS ACCESS POINTS**

(30) Priority: 04.04.2016 US 201662318185 P
(71) Applicant: Greig, Nigel, 1022 Auckland (NZ); Keown, Mark, 1023 Auckland (NZ)
(72) Inventor: Greig, Nigel, 1022 Auckland (NZ); Keown, Mark, 1023 Auckland (NZ)
(74) Representative: Ahmad, Sheikh Shakeel

(57) **Abstract**

An In-Flight Entertainment (IFE) system is described. The system comprises: a plurality of battery-powered wireless access point (WAP) devices, each WAP device being adapted to wirelessly communicate with at least one other of the plurality of WAP devices, wherein one or more wireless communication devices can connect to the IFE system via one or more of the WAP devices.

## Description

### Field of the invention

This invention relates to wireless communication, and is directed particularly toward wireless communication for in-flight entertainment (IFE) systems and aircraft cabin environments.

### Background

Current in-flight entertainment (IFE) systems require a considerable amount of infrastructure. They usually require a generous amount of space within the aircraft, including for example large closet or monument structures in which to store the server or headed equipment, space under seats for set distribution units, and further architecture within the seat itself, including arm rest wiring, and visual display units within the seat structure.

Moreover, there is a significant amount of cabling required throughout the aircraft, which is expensive to install, adds considerable weight and therefore operating cost for airlines and has significant burdens in terms of regular free approvals and requirements for all the cabling and its associated hardware.

Another significant feature of existing hardwired systems is that they can be difficult to restructure if there is a change in aircraft fit out, since location of set distribution units and associated cabling needs to be re-routed.

Finally, existing systems consume considerable power.

One development which is being experienced in the aircraft cabin environment is the desire by passengers to operate their own personal media delivery devices, or communication devices, on the aircraft. These devices typically comprise notebook or laptop machines, tablet computers and smartphones. Many of these devices have been loaded with content by their users, so the in-flight entertainment system, to the extent that it provides available power for example through USB ports, is frequently now used for charging purposes rather than for content delivery.

Most modern consumer owned devices include wireless communication capability, such as Wi-Fi for example, so an opportunity exists for airlines to provide content delivery wirelessly. There is also a demand from passengers for communication within the aircraft environment using their portable apparatus. However, providing this functionality within the aircraft is problematic.

### Object

It is an object of the present invention to provide a wireless communication environment within an aircraft, or to provide an improved IFE system. Alternatively it is an object of the present invention to provide a wireless IFE system.

Further objects of the invention will become apparent from the following description.

### Summary

Accordingly one aspect the invention broadly provides a battery operated wireless access point (WAP) adapted to wirelessly communicate with at least one other WAP to allow passenger devices to connect wirelessly to an IFE system.

In another aspect the invention broadly provides an IFE system which includes a plurality of battery powered WAP devices, each WAP device being adapted to wirelessly communicate with at least one other WAP device whereby one or more wireless communication devices can connect to the IFE system via one or more of the WAP devices.

Accordingly, the invention allows a battery operated wireless aircraft IFE system to be provided which comprises two or more WAP devices acting as a single unified embedded IFE system which does not require modifications to the aircraft.

The WAP devices can be placed in the aircraft at locations within an appropriate communication range of each other.

The WAP devices are also placed in selected or required locations so that a selected or required range of passenger seats are within range for connecting to the network.

In one embodiment the WAP devices comprise a mesh network.

In one embodiment the WAP devices are placed within overhead compartments within the aircraft cabin.

In another embodiment the devices are placed beneath or within seats in the aircraft cabin.

In one embodiment, one or more of the WAP devices communicates with a content server or data store.

In another embodiment, IFE content is loaded in a memory (volatile or non-volatile) associated with at least one of the WAP devices.

In yet another embodiment, IFE system content is distributed across memory (volatile or non-volatile) associated with a plurality of the WAP devices.

In yet a further embodiment, IFE content is received (for example streamed) remotely, externally of the aircraft, for provision through the IFE system comprising two or more WAP devices.

Preferably a battery is provided included with each WAP device.

Preferably the battery is rechargeable.

In one embodiment the battery associated with each WAP device can be charged wirelessly.

In one embodiment each WAP device may be removed from the aircraft for charging the battery and/or for loading content and/or for updating software.

In another embodiment, the WAP device can be charged while it is in the aircraft.

In another embodiment, the content and/or operating software for each WAP device may be replaced, upgraded or changed wirelessly.

In another aspect the invention provides an IFE system wireless access point (WAP) device which includes means to detect an air crew to passenger communication.

In one embodiment the detection means receives a wireless signal representative of the air crew to passenger communication.

In another embodiment the detection means detects a characteristic of the air crew to passenger communication. For example, the characteristic could be an audio frequency or pattern of audio frequencies. In other embodiments, the frequency may be ultrasonic.

In another embodiment, a plurality of WAP devices can receive audio signals, and upon detecting that they are all receiving the same audio signal, thereby detect that an aircrew to passenger communication has commenced.

In another embodiment the plurality of WAP devices include means to initiate a daisy chain wake up sequence.

In a further embodiment the WAP devices are configured to remain in a sleep or low power mode or a receive only mode until such time as they are instructed to resume normal operation and/or make a transmission. This reduces power consumption and eliminates unnecessary IFE transmissions.

In another embodiment each web device can receive a wake up signal from another communication device, which may comprise a mobile device, such as a mobile telephone for example. Therefore, such a remote device may be configured to transmit a wake up signal to one or more WAP devices using 2.4 and/or 313 gigahertz frequency bands.

Preferably, the WAP devices include MIMO and/or stand alone on directional and dissectorial antennas at different frequencies. This allows optimal range and signal courage to be achieved in varying aircraft configurations in cabin layout environments.

### Brief Description of the Drawings

One or more embodiments of the invention will be described below with reference to the accompanying drawings, in which:
**Figure 1** is a diagrammatic cross section through an aircraft cabin;
**Figure 2** is a schematic diagram illustrating the component modules in one embodiment of a WAP device; and
**Figure 3** is a schematic diagram illustrating an embodiment of a wireless IFE system including a plurality of WAP devices having some additional modules for detection of aircrew to passenger communications.

### Detailed Description

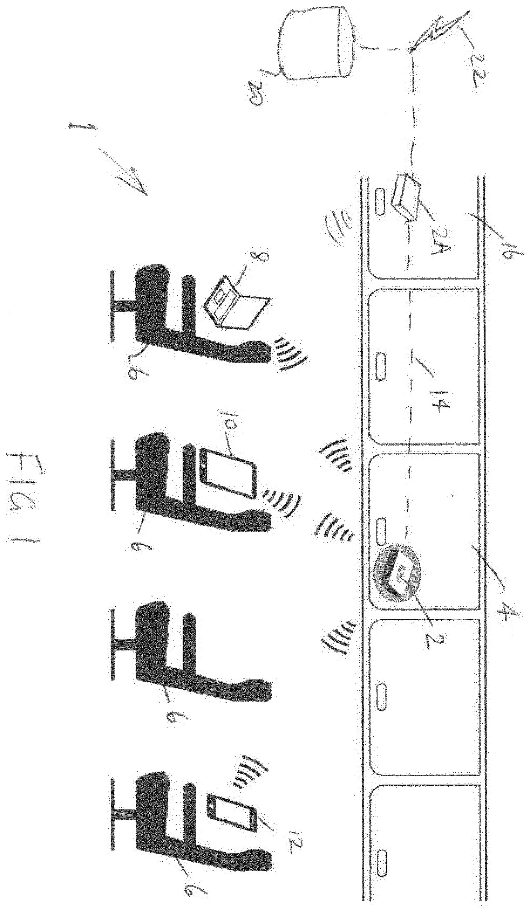

A diagrammatic illustration of the invention in use within an aircraft cabin 1 is shown in Figure 1. Referring to that Figure, the diagram illustrates a cross section through the aircraft cabin 1. A wireless access point (WAP) device 2 is shown. In this embodiment the device 2 is located within an overhead compartment or locker 4 within the aircraft cabin.

In this document, WAP device refers to a networking hardware device that allows a wireless communication compliant device (for example a Wi-Fi compliant device) to connect to a network.

The cabin 1 includes a plurality of seats 6. Passengers are not shown within the seats, however potential wireless compliant, in this embodiment Wi-Fi compliant, devices (i.e. devices which can communicate wirelessly) are shown adjacent to various of the passenger seats 6. As can be seen in Figure 1, the devices may include a notebook or laptop 8, a tablet computer 10, and a smartphone 12. Each of the Wi-Fi compliant devices 8-12 can communicate with the WAP 2.

Another WAP device 2A can also be provided, being essentially the same as device 2. One of the devices 2 or 2A may be a master device and the other may be a slave device. The devices may have a selectable slave/master option or this may be dynamically selected. For instance the devices may check to see if a signal is present; if so they become a slave device, otherwise they form the first master device. This process, or others, may be used to form a daisy chain or length of connected devices where some devise act as both slaves and masters, dependent on the communication. The slave devices may also transmit a signal indicating their presence.

The devices 2 and 2A wirelessly communicate with each other to form a network as shown by broken line 14. Preferably this communication is also over Wi-Fi or a substantially similar communication to the communication with user device. Although device 2A is shown as being located in an overhead compartment 16, it will be understood that the device 2A could be provided elsewhere in the aircraft, and still be in wireless communication with device 2. In embodiments of the system the devices each have an identification number or means, including an identification means which is dynamically assigned. This may be used to identify or specify characteristics of particular devices, including master/slave relationships or transmitting characteristics. In some cases the WAP devices are placed in particular locations which may be configured to support or hold them in place. The locations may have a locking means to secure the device. Alternatively the devices may be placed at substantially random locations in the aircraft. The devices may be directional, or have directional antennas so that the Wi-Fi coverage is selectable or controllable.

In one embodiment of the invention, device 2A is the same, or essentially the same, as device 2. Therefore device 2A can also communicate with wireless communication passenger devices such as device 8-12. However, due to the physical location of device 2A, device 2A may be unable to communicate effectively with device 12, but may be able to communicate efficiently or effectively with device 8. Devices 2 and 2A can be located relative to each other in the aircraft those to provide a desired communicated area or region for passengers i.e. they can be located as sufficient distance apart so as to a) communicate with each other as required, and b) provide communication for passenger devices throughout the aircraft cabin, or throughout a defined region in the aircraft cabin. The number of devices required may be set by the size of the cabin or the number of possible connections.

In one embodiment, there may be a number of devices 2 located throughout the aircraft cabin i.e. devices 2, 2A, 2B, 2C..., depending upon the physical extent and configuration or the cabin and the number of passengers. Therefore, the devices together form what may be considered to be a portable proximity network that is similar to a mesh communication network or a wireless distribution system. In one embodiment, the system provides a Wi-Fi network within the aircraft cabin 1. However, those skilled in the art which the invention relates will appreciate that other communication protocols may be used if required, as may other frequencies of operation. In some embodiments, the passenger portable devices may be used as part of the network i.e. to facilitate communication with other devices in the network. In some embodiments the passenger portable devices may in fact be owned by the airline and be associated with the aircraft. Also, the devices may in some embodiments not be truly portable, but instead be fixed to at least some degree to the aircraft cabin 1. For example the passenger devices may be tethered to fixtures, or affixed to a seat or part of a seat.

The network which is provided may be extended by further connection to another communication network such as another proximity communication network, and could communicate externally of the aircraft with ground based communication networks if required via appropriate avionics systems. For instance the network may interface with some form of ground electronics or network when the aircraft is on the tarmac, or at a loading gate location. Alternatively the ground network may be carried to the plane by a person (e.g. using a remote device or laptop).

In one embodiment the network which is formed by the devices 2, 2A, 2B etc is spontaneous and automatic upon the devices being switched on and located within wireless communication range of each other.

Still referring to FIG 1, the WAP devices may together provide a wireless aircraft IFE system which comprises two or more of the devices acting as a single unified embedded IFE system. Therefore, data/digital content which may be broadcast or otherwise streamed through the IFE system can be stored on one or more of the devices 2, 2A... if required. Additionally or alternatively, an external memory apparatus or sever such as IFE server or data store 20 may be wirelessly (or in some embodiments connected via wires) to one or more of the devices 2, such as device 2A as shown in Figure 1. Possible devices to be connected include display units, payment terminals, NFC or other communication terminals or any internet of things (IoT) type device.

Last, content requests from the users of devices 8-12 may be communicated wirelessly (for example via Wi-Fi) to the wireless access point devices 2, 2A etc to obtain contents toward on data store 20.

Alternatively or additionally, the aircraft systems may be communication with the external communication systems, such as ground based networks or data source, as indicated by communication simple 22 in Figure 1. Therefore, in some embodiments of the invention, the users of devices 8-12 may be able to communicate with ground base systems, for example receiving content from ground base systems, or communicating via audio or audio visual means with users with similar devices located on the ground, or possibly in other vehicles, for example other aircrafts, ships, cars etc.

In at least one embodiment of the invention, each WAP device 2, 2A... is battery operated and portable, so that a battery operated wireless IFE system is provided which can be installed or used without having to make any modification to the aircraft. Thus the WAPs act as a single unified embedded IFE system which does not require cabling or any other modifications. The battery may be replaceable, but preferably the whole unit is replaced from a store of units available between flights. Charging can then take place external to the aircraft. In the instance of a removal battery there may also be a characteristic of the battery, or removable component which provides a signal (such as slave/master signal) to the WAP device.

Each WAP device 2 is a networking device which is a broadcasting, networking capable, data storage device configured to store, manipulate, process, distribute and broadcast multimedia data packets, using a processor and software coupled to the data storage device that is configured to broadcast multimedia data packets transmitted to and from the broadcasting and communication network system.

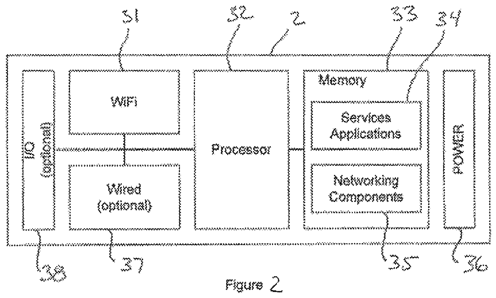

Referring to FIG. 2, the WAP device 2 is a portable self-contained networking device that generally includes a WiFi communication interface 31, a processor 32 with an associated memory 33 having stored therein services applications 34 and networking components 35, and a power source (battery) 36. Optionally, the WAP device 2 may also include a wired communication interface 37, to connect the networking device 12 to another device (e.g. long range link, router, server, bridge, repeater, etc.), and/or an input/output (I/O) interface 38, to attach external accessories like a keyboard or a screen, external processing power, memory, etc. The I/O interface 38 can also be used to connect accessories to allow the networking device 12 to behave like a simple computing device such as a portable netbook, tablet PC or digital signage screen with limited functionality.

The WAP device 2 can be provided with a memory 33 having stored therein only the networking components 35 or pre-loaded with various services applications 34. Examples of services applications 34 that may be pre-loaded into memory 33, or loaded at a later time, include: web server/web site creation application, e-commerce application, content management application, e-mail application, text messaging (SMS) application, voice over IP (VOIP) application, instant messaging application, blogging and micro-blogging applications, home automation, audio/video streaming, etc. Each device 2 2A may also have preloaded content or information. This may include audio/visual content for display or common data to reduce downloading requirements between devices. For instance maps of the world may be preloaded to allow flight progression to be displayed without continuous download of maps.

The WAP device 2 can also be provided with a memory 33 having stored therein software that can be downloaded by any computer and communication devices connected to any device 2 turning these computer and communication devices into extended access points. These extended access points can then connect to, update, and, but not limited to, synchronize with any existing broadcasting and communication network system.

The web site creation application consists, for example, of a content management system (CMS), enhanced with custom tools and functionalities according to customer needs. Users can use the CMS, without programming knowledge, to create and maintain a personalized web site with corporate, licensed and/or personal content.

The e-commerce application provides e-commerce capability even when not in the presence of, for example, any type of cellular/mobile network and/or internet service provider, and/or any traditional internet based platforms. This is performed, for example, via the cellular back channel of the user's computer and communication device 22 (1x, Edge, 3G, etc.), by storing in the memory 33 of the networking device 12 all transactions information and then accessing it remotely to gather the info or, in a timely manner, wirelessly transferring this data via a cell/mobile or internet network, using a 3G connection or any similar add on network connection.

The content management application allows the possibility to trigger the download of content/data (e.g. mp3, mpeg, text documents, etc.) via, for example, the cellular back channel of the user's computer and communication device 22 (1x, Edge, 3G, etc.) and/or for offline upload to capture user data such as email, contact info, etc. In embodiments of the system content downloaded by a first WAP device 2 may be shared with other WAP devices 2A. This may assist to reduce the amount of communication or downloading to a storage device. For instance if WAP device 2 requires particular content it may download it from device 2A instead of requiring storage. This may allow the available content to be updated when a single device is updated, the remaining content being updated from the first updated device to the remaining device. In an alternative embodiment the master device, or another device, may be regarded as a storage device to store content. The stored content may then preferentially be supplied to other WAP devices instead of directly to consumer devices.

The VOIP application can also be pre-configured on the WAP device 2, allowing individuals to communicate using the session initiation protocol (SIP) while connected to the internet or an ensemble of interconnected WAP devices 2, or any similar networking protocol, allowing individuals to communicate while in proximity and connected to a WAP device 2 using a computer and communication device.

The WAP device 2 is provided with a memory 33 having stored therein networking components 35 having a mesh protocol allowing spontaneous creation of a mesh network with data exchange amongst all devices 2 within range of each other. Willingly shared data is automatically pushed to neighbouring devices 2 to facilitate seamless data transfer and social interactions (if desired) in order to cater to a larger audience and share the content that resides on each networking device 2, a third party external memory apparatus/server and external memory apparatus/server 20, and any of the interconnected computers and communication devices 8-12.

The networking components 35 include, for example, components providing peer to peer (PnP) networking capabilities: all bandwidth intensive use being distributed among all WAP devices 2 and connected computer and communication devices 8-12.

The networking components 35 allow the WAP device 2 to be used in a local area network setting to centralize multimedia content and provide wireless distribution of the multimedia content to Digital Living Network Alliance (DLNA) protocol compatible devices. The networking components 35 also provide, when in presence of any type of internet access, remote access to all this multimedia content from anywhere via any computer and communication device 22 that is connected to the internet.

Other components insure that upgrades of the operating firmware, operating system or content are effectuated when a WAP device 2 is in proximity to another device 2 which has a more updated version and content. Spontaneous transfer/synchronization and update of firmware, operating system and content may also be triggered via a computer and communication device 8-12 set appropriately. Update of firmware methods may include direct connection of a unit to the internet, using e.g. an SD card for direct updating, or updating to the firmware of the newest version available in the system. In another embodiment peer to peer updating can be handled by the master.

The networking components 35 may include a secure communications component to allow an individual to connect to an existing WAP device 2 using all types of anonymization and security tools like virtual private network (VPN), proxies, pretty good privacy (PGP) encryption, etc.

The battery 36 may comprise part of the WAP device 2, being provided in the same housing. The battery may be rechargeable, and such recharging can be performed when the aircraft is not in use or by taking the device off the aircraft and plugging in to a charging unit, or alternatively by using a wireless charging system. Similarly, updating of software or memory content can be performed using data cable, or wirelessly.

The processor 32 can act to place the device 2 into a low power or sleep mode in which it either/or a) uses minimal power and does not transmit, i.e. uses just sufficient power to receive instructions from another device 2 such as a master device in the event the master device instructs it to wake up and resume full operability; b) does not transmit (and thus reduces power consumption while also reducing RF emissions in the cabin).

In one embodiment the devices a daisy chained, so that a command to wake up may be received by one device, for example a master unit, which then initiates a daisy chain wake up sequence of all the WAP devices in the wireless network. Modified Wi-Fi protocols may be used to configure the WAP devices so that they remain in a "listen only" mode prior to receipt of the wake up signal. Also, the wake up signal can be initiated from another RF communication device, for example a device that is used by a crew member, without limitation including a cell phone, bluetooth enable device, Wi-Fi enable device, a device which includes an infrared port, or an ultrasonic frequency generator, or optical transmission capability to provide a signal which wakes up one or more of the WAP devices, or which causes a daisy chain communication to wake up the devices. The remote control device may be configured to transmit one or more wake up signals to one or more of the WAP devices using the 2.4 and/or 313 Gigahertz frequency bands.

The Wi-Fi unit 31 as shown in Figure 2 may also include a plurality of antennas in order to achieve required (most preferably optimal) range and signal coverage depending on varying aircraft cabin configurations and environments. Therefore, multiple input and a multiple output (MIMO) antennas may be used and/or stand alone on the directional and/or sectorial antennas at one or more frequencies.

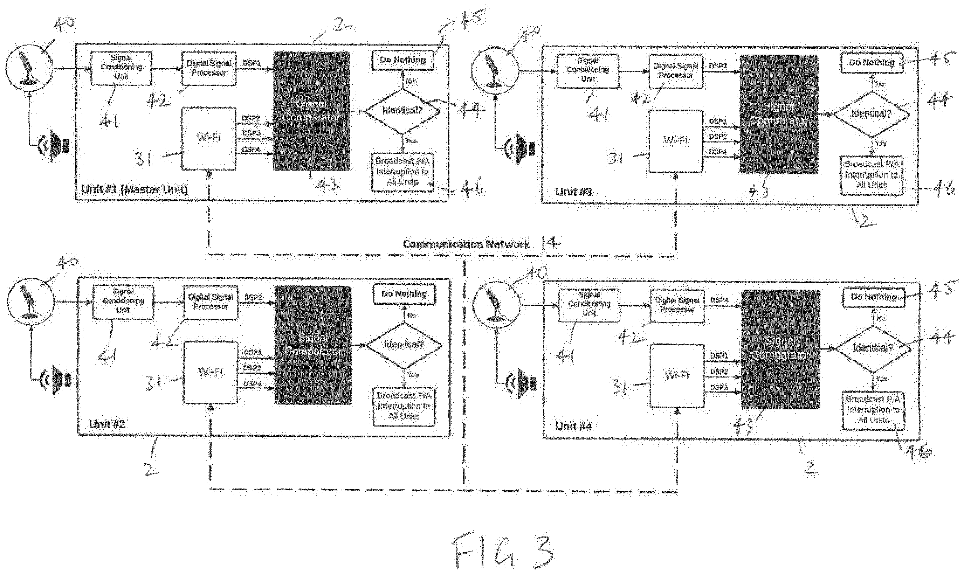

Turning now to FIG 3, the WAP devices 2 all as described above are shown including additional functionality. This functionality relates to detection of an aircrew to passenger message, such as a PA message (which could simply be passenger information, or an emergency message, or a safety briefing for example). Because the system described herein can be provided without any modification the aircraft some mechanism is required to ensure that passengers can hear and pay attention to aircrew to passenger announcements. Referring to FIG 3, additional functionality comprises a microphone 40, signal conditioning unit 41, DSP 42 and signal comparator 43. In use, microphone 40 receives sound in the aircraft cabin environment in which the device 2 is located. Aircrew to passenger announcements are broadcast throughout the cabin, so all devices 2 will receive the same sound. This may be handled by configuring the system, in the internal system protocol so that a particular signal, or characteristic of a signal, will override, or cause a following signal to overriding any other(s).

Signal conditioning unit 41 and DSP 42 in each device 2 detect the incoming audio stream and provide this over the communication network 14 to the other WAP devices. The comparators 43 in each device compare the DSP output signals of the other devices with their own - as shown in step 44. If the signals are not identical (step 45) then the device operates as per usual. If the DSP signals are identical, as shown in step 46, then a PA broadcast interruption is generated. This results in communication to devices 8-12 being interrupted, or in the broadcast message being re-broadcast to the devices 8-12.

In a variation of FIG 3, the announcement may be preceded by a particular sound or sequence of sounds that may make it simpler for DSP 42 to identify. This could be a very short audio signal that may not be detectable by the human ear, for example the sound may be ultrasonic. Another variation is to have a separate communication device the aircrew can use when making an announcement that the system can recognise and then provide the interruption feature. This may be an instruction generated using an RF signal e.g. over Bluetooth of Wi-Fi that is received by one of the devices 2, and communicated over the network 14 to the other units to make them all perform the interrupt feature. Thus a crew member may use a cell phone, tablet or similar device to cause the interrupt to occur.

It will be seen from the foregoing that a battery powered distribution network of WAPs is provided which is capable of broadcasting content/data to passengers' portable electronic devices. This can negate the need for in-seat displays, power from the aircraft and the associated power and data wiring and interfacing.

## Claims

1. An In-flight Entertainment (IFE) system comprising:
a plurality of battery powered wireless access point (WAP) devices, each WAP device being adapted to wirelessly communicate with at least one other of the plurality of WAP devices,
wherein one or more wireless communication devices can connect to the IFE system via one or more of the WAP devices.

2. An IFE system as claimed in claim 1, wherein the plurality of WAP devices are placed in selected locations wherein a selected or required range of passenger seats are within range.

3. An IFE system as claimed in either one of claims 1 or 2, wherein the plurality of WAP devices are placed within overhead compartments within the aircraft cabin and/or are placed beneath or within seats in the aircraft cabin.

4. An IFE system as claimed in any one of claims 1 to 3, wherein one or more of the WAP devices communicates with a content server or data store.

5. An IFE system as claimed in any one of claims 1 to 4, wherein IFE content is loaded in a memory associated with at least one of the WAP devices.

6. An IFE system as claimed in any one of claims 1 to 4, wherein IFE content is distributed across memory associated with a plurality of the WAP devices.

7. An IFE system as claimed in any one of claims 1 to 6, wherein the IFE system comprises a communication apparatus for receiving content externally of the aircraft.

8. An IFE system as claimed in any one of claims 1 to 7, wherein the batteries of the battery powered WAP devices are rechargeable or are configured to be charged wirelessly.

9. An IFE system as claimed in claim 8, wherein the plurality of WAP devices is configured to be removable and replaceable from the aircraft.

10. An IFE system as claimed in any one of claims 1 to 9, wherein the content and/or operating software for each of the plurality of WAP devices is configured to be replaced, upgraded or changed wirelessly.

11. An IFE system as claimed in any one of claims 1 to 10, wherein each of the plurality of WAP devices includes a detector to detect an air crew to passenger communication.

12. An IFE system as claimed in claim 11, wherein the detector receives a wireless signal representative of the air crew to passenger communication; a characteristic of the air crew to passenger communication; or a plurality of detectors receive the same signal.

13. An IFE system as claimed in any one of claims 1 to 12, wherein the WAP devices are configured to initiate a daisy chain wake up sequence.

14. An IFE system as claimed in any one of claims 1 to 13, wherein the WAP devices are configured to remain in a low power mode, or a receive only mode, until receiving a signal.

15. An IFE system as claimed in any one of claims 1 to 14, wherein the WAP devices are configured to receive a wake up signal from an external electronic device.
